# EUROPEAN PATENT SPECIFICATION

(11) **EP 2 374 664 B1**
(45) Date of publication and mention of the grant of the patent: **02.10.2013**
(21) Application number: 10014969.9
(22) Date of filing: 25.11.2010
(51) Int. Cl.: B60R 9/06, B60R 9/10

(54) **Rack for transport of bicycles and the like**
Gepäckträger für den Transport von Fahrrädern und dergleichen
Bâti pour le transport de bicyclettes et similaire

(30) Priority: 26.11.2009 NL 1037504
(43) Date of publication of application: 12.10.2011
(73) Proprietor: Hop, Teun, 3846 CG Harderwijk (NL); de Groot, Harm Jan, 3846 CG Harderwijk (NL)
(72) Inventor: Hop, Teun, 3846 CG Harderwijk (NL); de Groot, Harm Jan, 3846 CG Harderwijk (NL)
(74) Representative: Ferguson, Alexander

(56) References cited:
- EP-A1- 0 755 826
- US-A- 6 007 290
- US-A1- 2003 099 531
- US-A1- 2008 206 030
- US-B1- 6 361 264

## Description

### BACKGROUND OF THE INVENTION

The invention relates to an assembly of a main vehicle, such as a caravan or campervan, and a rack for at the rear side of the main vehicle transporting vehicles for one or two persons, which vehicles are provided with wheels, particularly two-wheelers, such as bicycles, scooters and the like. The invention moreover relates to such a rack.

Bike racks to be attached to the rear of caravans or campervans are generally known. Usually they comprise a pair of rod-shaped brackets that with their ends are attached to the rear side of the caravan or campervan. They often have a foldable support for the two-wheelers. A drawback of these racks is that the user when placing the two-wheelers on the rack or when removing the two-wheelers from it, has to carry out lifting activities that may be objectionable and a source of injuries. It should be considered here that it often regards elderly people who use such combinations.

In order to alleviate this objection, rather complex and as a result expensive rack structures have been invented, in which the support can be swivelled downwards from a transport position to a loading or discharge position that is situated lower.

A simpler approach was offered by European patent application 0.755.826, in which an assembly according to the preamble of claim 1 is shown, wherein the rack has a stationary frame and a movable frame, that can be moved linearly up and down along the stationary frame, guided by means of a lowermost sliding connection and an uppermost sliding connection, that are fixedly attached to the movable frame and the stationary frame, respectively, and when being moved are either moved towards each other or apart. For the movement of the movable frame a scissors structure is present. A drawback of this rack is that due the sliding connections the vertical stroke is principally limited. The user will still need to carry out lifting activities.

US 6.007.290 discloses a lift mechanism for mounting on the back of a motor home. The lift mechanism comprises a double platform for vehicles, wherein the platforms are movable up and down along a central hoist column by means of cables driven by a permanent, motorized drive in/on the central column, The central column is connected to the rear wall of the motor home at its upper end and attached to the trailer hitch of the motor home at its lower end.

US 6.361.264 relates to a waste container transporter comprising a central column which at its lower end is attached to the hitch receiver of a truck. A lifter for the container has two roller guides which are spaced from each other and are guided within the central column. The lifter has lower and upper cross bars for carrying and supporting a container.

US 2003/0099531 is another example of a similar device.

It is noted that in Canadian patent application 1.328.858 a transport rack for unfolded wheelchairs is shown, that is attached to a towing hook. The foldable rack can indeed be lowered down to the ground, however, the chosen guide of vertical rods of the movable frame in tubes of the stationary frame limits the vertical stroke. The rack will in many cases hide the rear lights and the licence plate of the vehicle from view.

### SUMMARY OF THE INVENTION

It is an object of the invention to provide a rack of the type mentioned in the preamble, with which a large vertical range can be achieved.

It is an object of the invention to provide a rack of the type mentioned in the preamble that can easily be loaded and unloaded.

It is an object of the invention to provide a rack of the type mentioned in the preamble that is easy to operate.

It is an object of the invention to provide a rack of the type mentioned in the preamble that can be manufactured/built up at relatively low cost.

It is an object of the invention to provide a rack of the type mentioned in the preamble that forms a lightweight structure.

It is an object of the invention to provide a rack of the type mentioned in the preamble that can be attached without the intermediary of a towing hook.

It is an object of the invention to provide a rack of the type mentioned in the preamble with which the free space under the campervan or caravan is not noticeably limited.

For achieving at least one of these objects the invention according to one aspect provides an assembly according to claim 1.

By having the movable guides that are at intermediate distance from each other, engage onto the stationary guide and having said stationary guide be a part of the stationary parts of the rack, while retaining stability without too high frictional forces, in principle a large stroke can be realised, substantially bounded by the length of the stationary guide. The stationary guide may extend as far as wanted, for instance to broadly above a window at the rear side of the campervan and the like, or even up onto its roof. The movable frame may have a limited height, sufficient for stably supporting the vehicles to be transported. The stationary guide need not accommodate parts of the movable frame as a result of which otherwise a stroke-limiting stop would be formed for the movement of the movable frame. In that way it is simpler to construct a rack having such a large stroke that lifting activities when loading/unloading can be largely limited and rear lights/license plate of the main vehicle can remain visible.

A maximum guide length can be achieved, and thus a maximum lifting stroke for the movable frame.

The movable guides can comprise one or more rollers, particularly freely rotatable rollers, for enhancing the movement of the movable frame. Preferably the movable guides form the only direct points of contact of the movable frame with the stationary frame.

The movable guides preferably engage onto several sides of the respective stationary guide, preferably on either side thereof, particularly at the front side and the rear side of the respective stationary guide as a result of which the stability of the movable frame and its positioning is enhanced. It is possible in that case that movable guides of a different kind are used, such as at the one side, where the pressure is relatively low, a slide of low-friction material and at the opposing side, where the pressure is relatively high, a roller.

The required lifting activities when loading/unloading can be minimised when the stationary guide and the movable frame has such a length that the vehicle for one or two persons can be wheeled into supporting engagement with the support means. In that case the vehicle can simply be wheeled from the road surface or ground onto the support means when in the lowered position.

The two stationary guides preferably are situated at a mutual horizontal distance from each other that exceeds the horizontal dimension of a standard license plate, particularly an EC license plate, in particular exceeds approximately 52 cm. In that way the stability is enhanced and in the preferred embodiment the view on the license plate is also kept free, so that the rack itself need not have a holder for the license plate.

In side view of the rack, the two stationary guides can be substantially L-shaped and on both outer ends of the L be provided with said fastening means. In that way in the condition that they are mounted to a campervan or caravan they can extend to underneath the rear wall thereof for fastening to the chassis thereof. The rack may in that case comprise a mounting box section that is provided with mounting plates attached to chassis beams of a campervan or caravan, wherein the horizontal legs of the L-shaped stationary guides are attached, particularly welded, to the mounting box section.

Ease of use is further enhanced when the said means for moving comprise a cable-winch system. It is noted that a cable here means an elongated pulling element that can be wound up, including a cord. For limiting the power to be used for lifting the movable frame, the cable-winch system may comprise one or more pulleys attached to the stationary frame and one or more pulleys attached to the movable frame, around which pulleys the cable runs.

For ease of operation the winch may be arranged on a movable outrigger, particularly an outrigger bar, that preferably is hinged to the rack, preferably at a side of the rack. In that way the winch is easy to reach. The winch can be easily operable by a tool that can removably be placed thereon, such as a crank or (cordless) drilling tool.

The outrigger bar can be part of the means for locking the movable frame with respect to the stationary frame in the transport position.

In a manner known per se the support means can comprise a platform that preferably can be folded up. The platform preferably has the form of a bicycle support.

According to a further aspect the invention provides a rack for transporting vehicles for one or two persons, which vehicles are provided with wheels, in particular bicycles, as described in claim 14.

When the rear side of the caravan or campervan has a window, the stationary guide or guide rod can be attached to the rear side at a location above the window.

In one embodiment the caravan or campervan has a license plate, wherein the rack comprises two parallel stationary guides or stationary guide rods that are situated at a mutual distance from each other that is at least equal to the horizontal dimension of the license plate, preferably exceeds it.

In one embodiment the caravan or campervan has a license plate and/or rear lights/brake lights, wherein the support means, particularly the platform, in the transport position are situated above the license plate and/or the rear lights/brake lights, so that during moving the camper or campervan the license plate and/or rear lights/brake lights are always visible and the rack itself need not be provided with a holder for license plate and rear lights/brake lights.

The stationary guide(s) via a bend of approximately 90 degrees can merge into (a) substantially horizontal, forwardly oriented end portion(s) that is/are attached to the chassis, particularly the chassis longitudinal beams, of the caravan or campervan. In that way they remain at a distance from the ground that is equal to or exceeds the distance from chassis to ground, so that the free space below the campervan or caravan, is kept substantially intact. The end portions can be attached to a mounting box section that is transverse to the driving direction and attached to the chassis beams of the campervan or caravan by means of mounting plates.

Further aspects of the invention are described in the attached claims, the contents of which, insofar as not described in the above, should be considered inserted here.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of an exemplary embodiment shown in the attached drawings, in which:
Figure 1A is a side view of an exemplary embodiment of a rack according to the invention mounted to a campervan, in the lowered position;
Figure 1B is a rear view of the arrangement of figure 1A;
Figure 2A is a side view of the rack of figure 1A, now in the transport position; and
Figure 2B is a rear view of the arrangement of figure 2A.

### DETAILED DESCRIPTION OF THE DRAWINGS

The rack 1 shown in the figures is substantially built up from aluminium tubes and sections, and as a result has a low weight, and comprises a stationary frame 2 and a movable frame 3.

The stationary frame 2 has a simple open structure and comprises two substantially L-shaped guide rods 4a,4b, that are situated at an intermediate distance from each other that exceeds the length of a license plate 37 and at their upper end 31a,b are attached to the rear side 40 of a campervan 10, in which there is a window 41. The guide rods 4a,b extend substantially vertically downwards, the actual guide portion, and at their lower end continued via a bend of approximately 90 degrees into a horizontal portion that has an attachment function. Thus they extend below along the rear lower edge 11 (optionally with bumper) of the campervan 10, in forward direction and subsequently through fitting holes 15 in a mounting box section 13, to which they are attached, for instance by welding or bolts. At the ends the mounting box section 13 is welded to mounting plates 14, that are attached by means of bolts to respective longitudinal beams 12 of the chassis of the campervan 10. In an upper portion the two guide rods 4a,b are connected to each other by a beam 16. The position of the beam 16 along the rods 4a,b can be adjustable, in particular when the rods 4a,b extend further upwards, for instance to near the roof or up onto the roof of the campervan 10.

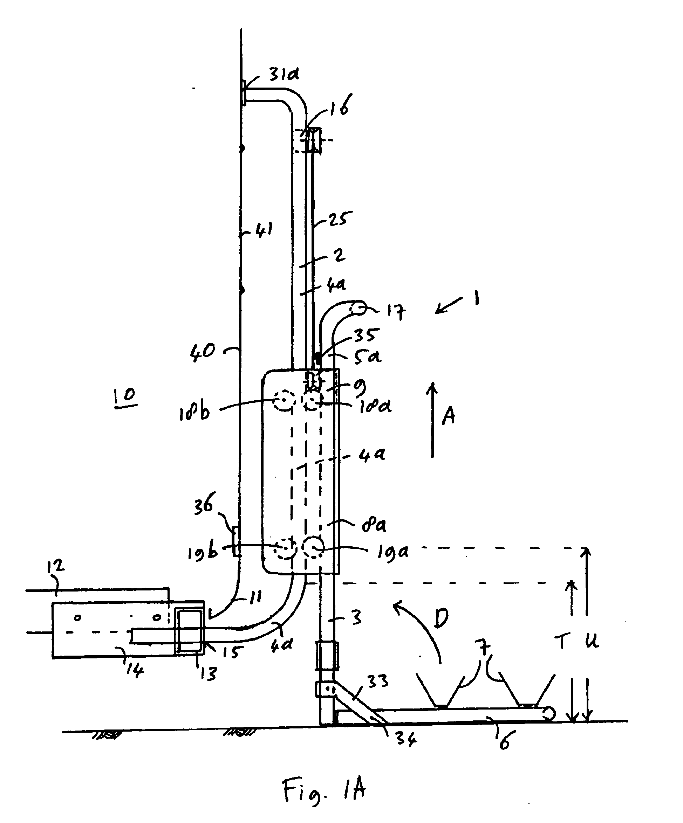

The movable frame 3 comprises two rods 5a,5b, which at the top merge into a transverse bracket 17 against which a bicycle (not shown for reasons of clarity) is able to lean. Slightly below that there is a beam 9, which with its ends is attached to both rods 5a,b. At the free lower ends of the rods 5a,b double metal plates 33a,b have been attached, at the outer ends of which at the location of 34 a platform in the form of a bicycle support 6 is hinged, so that the support 6 can be folded up (direction D) from the shown horizontal transport position to a vertical inoperative position. The support 6 is provided with, in this example, two channels 7 for accommodation of the wheel rims/tyres of the bicycles, in the usual manner. The distance U from the rollers 19a,b to the bottom side of the support 6 exceeds the distance T from the lower end of the vertical, stretched portion of the rods 4a,b to the ground (figure 1A).

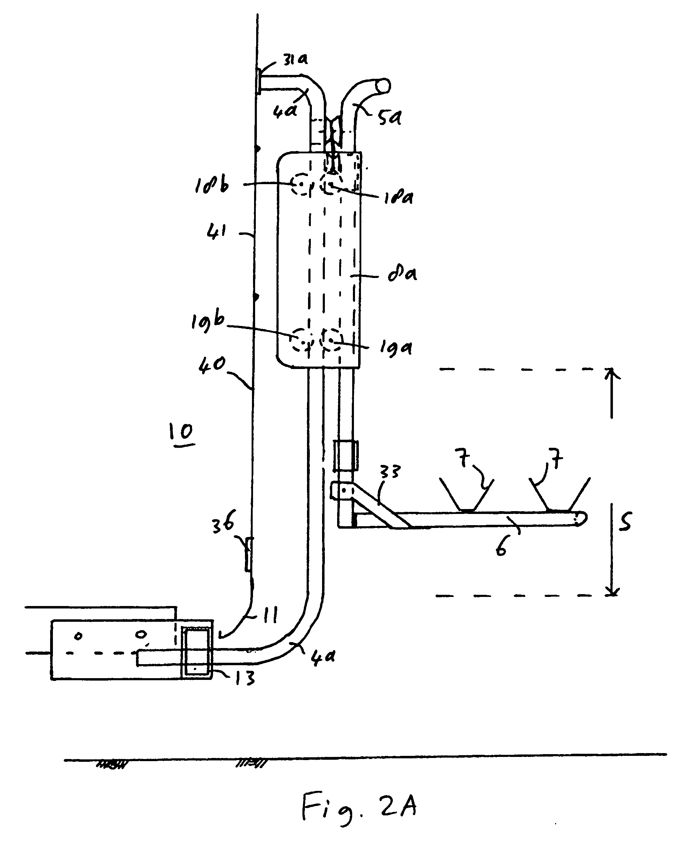

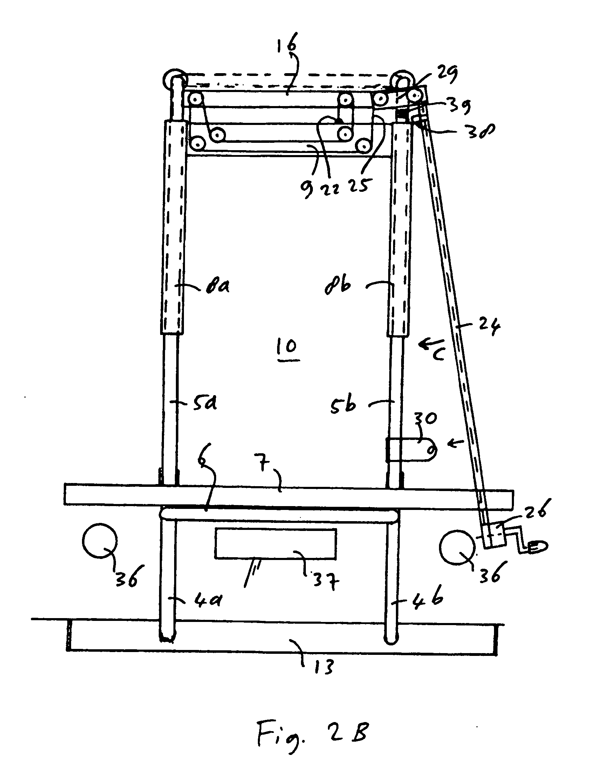

On each of the rods 5a,b a holder 8a,b formed by a U-shaped metal plate is attached, within which holder two pairs of freely rotatable rollers 18a,b and 19a,b have been arranged. The rollers 18a,b and 19a,b are stationary with respect to the movable frame 3 and have horizontal rotary centre lines that are transverse to the driving direction of the vehicle 10. They have a shape that fits the shape of the outer surface of the stationary rods 4a,b and engage onto either side thereof, at the front side and the rear side, at two locations that are spaced apart from each other in the direction of the rods 4a,b. As a result a reliable guide is provided for the movable frame 3 for moving it along behind the rods 4a,b with sufficient stability for the movable frame 3. Because the guide rods 4a,b are vertically free over almost their full length, the holder 8 can have a large range. The size of the achievable stroke for this exemplary embodiment is shown in figure 2A by S. It is amply sufficient to bring the support 6 down to the ground and lift it sufficiently high, to a level (transport position) wherein a license plate 37 is fully visible between both guide rods 4a,b and also the rear lights 36 can still be seen (figures 2A,B). A license plate on the support 6 can then be left out. The mounting box section 13 forms the lowest point in the transport position of the rack 1, which point however hardly reaches lower than the chassis of the campervan.

It is noted that instead of the rollers 18a and 19b guide blocks can also be provided, for instance made of nylon, as the pressure at those locations is lower than at the location of the opposite rollers 18b 19a.

For the movement of the movable frame 3 in this example a cable-winch system is provided, wherein a number of pulleys 20a,b,c,d are arranged on the beam 9 of the movable frame 3 so as to be freely rotatable and a number of freely rotatable pulleys 21a,b,c,d have been arranged on the beam 16 of the stationary frame 2. At the location of 22, a cable 25 is attached with the outer end to the beam 9 and runs around successive pulleys 21c,20d,20c,21b,20b,20a,21a, and subsequently around pulley 23, to continue in the inside of an outrigger bar 24, and at the outer end is attached to a winch 26 at the lower end of the bar 24. At the side of the rack, at the top, the pulley 23 and the bar 24 are attached to a plate 29 that is hinged to the beam 16 so that the bar 24 is able to swivel in the directions C. The winch 26 is provided with a drive entry 27, onto which a crank 28 or another drive, such as a (cordless) drill can be placed to drive the winch 26.

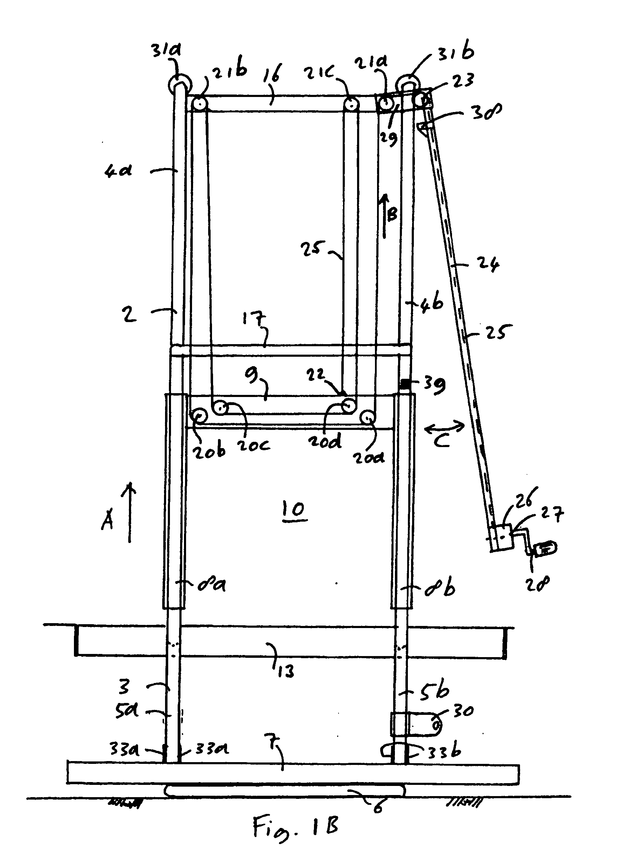

When driving the winch 26 will pull in the cable 25, resulting in the beam 9 and therewith the movable frame 3 being pulled upwards in direction A, until the transport position shown in figures 2A,B has been reached. Then the bar 24 can be taken to the rod 5b, in order to be accommodated between two lips 30 that are fixedly attached on the rod 5b. With a lock the bar 24 can be locked. At the side facing the campervan 10 (in figures 1B and 2B not really perceivable) the rod 5b is provided with a cam 39. In the lifted position of figures 2A.B said cam 39 has reached so high that a support 38 fixedly attached to the bar 24 engages just under it. In said locked position of the bar 24 the cam 39 supports on the support 38 and the movable frame 3 is locked in its high position.

The above description is included to illustrate the operation of preferred embodiments of the invention and not to limit the scope of the invention.

## Claims

1. Assembly (1,10) of a main vehicle (10), such as a caravan or campervan, and a rack (1) for transporting vehicles for one or two persons, which vehicles are provided with wheels, in particular bicycles, the rack being provided with means (31 a,b) for fastening the rack to the rear side of the main vehicle, the rack comprising a stationary frame (2) provided with the fastening means, which frame comprises two elongated substantially upwardly extending preferably substantially vertical stationary guides (4a,b) that are parallel to each other, which stationary guides preferably comprise , particularly tubular, guide rodes, wherein the rack furthermore comprises a movable frame (3) that is provided with means (6) for supporting one or more vehicles for one or two persons, wherein the rack is provided with means (20a-d,21a-d,22-28) for moving the support means up and down along the elongated guides between a lowered position in which a vehicle for one or two persons can be placed on the support means or be removed therefrom and a transport position situated at a higher level, wherein the movable frame is provided with guides (8a,b) moving along with it for guided engagement onto the outer surface of the stationary guides (4a,b) at the stationary frame, wherein the caravan or campervan at the rear side forms a lower edge area (11) provided with a bumper, **characterized in that** the movable guides (8a,b) comprise a first (18a,b) and a second (19a,b) guide, which in guide direction are situated at a, preferably constant, intermediate distance from each other, and **in that** the stationary guides (4a,b) extend behind and below along the lower edge area and with their lower ends are attached to the chassis, particularly the chassis longitudinal beams (12), of the caravan or campervan (10).

2. Assembly according to claim 1, wherein the movable guides (8a,b), which preferably comprise one or more rollers (18a,b;19a,b) form the only direct points of contact of the movable frame with the stationary frame.

3. Assembly according to claim 1 or 2, wherein the movable guides (8a,b) engage onto several sides of the respective stationary guide (4a,b), preferably on either side thereof, particularly at the front side and the rear side of the respective stationary guide, wherein preferably movable guides of a different kind have been used, preferably at the one side, where the pressure is relatively low, a slide of low-friction material and at the opposing side, where the pressure is relatively high, a roller.

4. Assembly according to any one of the preceding claims, wherein the stationary guides (4a,b) and the movable frame (3) have such a length that the vehicle for one or two persons can be wheeled into supporting engagement with the support means when in the lowered position.

5. Assembly according to any one of the preceding claims, wherein the caravan or campervan has a license plate (37) at the rear, wherein the two stationary guides (4a,b) are situated at a mutual horizontal distance from each other that exceeds the horizontal dimension of a standard license plate, particularly an EC license plate, in particular exceeds approximately 52 cm.

6. Assembly according to claim 5, wherein the two stationary guides (4a,b) in side view of the rack are substantially L-shaped and on both outer ends of the L are provided with said fastening means.

7. Assembly according to claim 6, furthermore comprising a mounting box section (13) that is provided with mounting plates (14) attached to the chassis beams (12) of the campervan or caravan, wherein the horizontal legs of the L-shaped stationary guides are attached, particularly welded, to the mounting box section.

8. Assembly according to any one of the claims 1-5, wherein the stationary guides (4a,b) via a bend of approximately 90 degrees merge into substantially horizontal, forwardly oriented end portions that are attached to the chassis, particularly the chassis longitudinal beams (12), of the caravan or campervan.

9. Assembly according to claim 8, wherein the end portions are attached to a mounting box section (13) that is transverse to the driving direction and attached to the chassis beams (12 of the campervan or caravan by means of mounting plates (14).

10. Assembly according to any one of the preceding claims, wherein the rear side of the caravan or campervan has a window (41), wherein the stationary guides (4a,b) are attached to the rear side at a location above the window.

11. Assembly according to any one of the [receding claims, wherein the caravan or campervan comprises a license plate (37) and/or rear lights/brake lights (36), wherein the support means (6), particularly the platform, in the transport position are situated above the license plate and/or the rear lights/brake lights.

12. Assembly according to any one of the preceding claims, wherein said means for moving comprise a cable-winch system, wherein the cable-winch system preferably comprises one or more pulleys (21a-d) attached to the stationary frame and one or more pulleys (20a-d) attached to the movable frame, around which pulleys the cable (25) runs, wherein the winch (26) preferably is arranged on a movable outrigger (24), preferably an outrigger bar, that preferably is hinged to the rack (1), preferably at a side of the rack, wherein the outrigger bar preferably is part of the means for locking the movable frame (3) with respect to the stationary frame (2) in the transport position, wherein the winch preferably is operable by a tool that can removably be placed thereon, such as a crank or (cordless) drilling tool.

13. Assembly according to any one of the preceding claims, wherein the support means (6) comprise a platform, particularly having the form of a bicycle support (7), that preferably can be folded up.

14. Rack (1) for use in an assembly according to any one of the preceding claims, provided with means (31a,b) for fastening the rack to the rear side of a main vehicle, such as a caravan or a campervan, which at the rear side forms a lower edge area (11) provided with a bumper, comprising a stationary frame (2) provided with the fastening means, which frame comprises two elongated substantially upwardly extending preferably substantially vertical stationary guides (4a,b) that are parallel to each other, which stationary guides preferably comprise, particularly tubular, guide rods, wherein the rack furthermore comprises a movable frame (3) that is provided with means (6) for supporting one or more vehicles for one or two persons, wherein the rack is provided with means (20a-d,21 a-d,22-28) for moving the support means up and down along the elongated guides between a lowered position in which a vehicle for one or two persons can be placed on the support means or be removed therefrom and a transport position situated at a higher level, wherein the movable frame is provided with guides (8a,b) moving along with it for guided engagement onto the outer surface of the stationary guides at the stationary frame, which movable guides comprise a first (18a,b) and a second (19a,b) guide, which in guide direction are situated at a, preferably constant, intermediate distance from each other, which guides preferably comprise one or more rollers, wherein the stationary elongated guides via a bend of approximately 90 degrees merge into substantially horizontal, forwardly oriented end portions for extending behind and below along the lower edge area and for attachment with their lower ends to the chassis, in particular the chassis longitudinal beams, of the caravan or campervan.

15. Rack according to claim 14, wherein the two stationary guides (4a,b) are situated at a mutual horizontal distance from each other that exceeds the horizontal dimension of a standard license plate, particularly an EC license plate, in particular exceeds approximately 52 cm.

## Patentansprüche

1. Anordnung (1, 10) eines Hauptfahrzeugs (10), wie ein Caravan oder ein Reisemobil, und eines Trägers (1) zum Transportieren von Fahrzeugen für eine oder zwei Person(en), wobei die Fahrzeuge mit Rädern ausgestattet sind, insbesondere Fahrräder, wobei der Träger mit Mitteln (31a,b) zum Befestigen des Trägers an der Hinterseite des Hauptfahrzeugs versehen ist, wobei der Träger umfasst einen stationären Rahmen (2), welcher mit dem Befestigungsmitteln versehen ist, wobei der Rahmen zwei längliche, im Wesentlichen sich nach oben erstreckende, vorzugsweise im Wesentlichen vertikale stationäre Führungen (4a,b) umfasst, welche parallel zueinander sind, wobei die stationären Führungen vorzugsweise insbesondere rohrförmige Führungsstangen umfassen, wobei der Träger des Weiteren einen beweglichen Rahmen (3) umfasst, welcher mit einem Mittel (6) zum Tragen eines oder mehrerer Fahrzeuge für eine oder zwei Personen versehen ist, wobei der Träger mit Mitteln (20a-d, 21a-d, 22-28) versehen ist, um das Tragemittel hinauf und hinunter entlang der länglichen Führungen zwischen einer abgesenkten Position, in welcher ein Fahrzeug für eine oder zwei Personen auf dem Tragemittel gesetzt oder von diesem entfernt werden kann, und einer Transportposition bewegen zu können, welche auf einem höheren Niveau gelegen ist, wobei der bewegliche Rahmen mit Führungen (8a,b) welche gemeinsam mit ihm bewogen werden für geführten Eingriff auf der Außenfläche der stationären Führungen (4a,b) am stationären Rahmen, versehen ist, wobei der Caravan oder das Reisemobil an der Hinterseite einen unteren Randbereich (11), die mit einer Stoßfänger versehen ist, bildet, **dadurch gekennzeichnet, dass** die beweglichen Führungen (8a,b) eine erste (18a,b) und eine zweite (19a,b) Führung umfassen, welche in Führungsrichtung mit einem, vorzugsweise konstanten, Zwischenabstand zueinander angeordnet sind, und dass die stationären Führungen (4a,b) sich hinter und unterhalb entlang der unteren Kantenfläche erstrecken und mit ihren unteren Enden am Fahrgestell, insbesondere an den Längsträgern (12) des Fahrgestells des Caravans oder Reisemobil (10) befestigt sind.

2. Anordnung nach Anspruch 1, wobei die beweglichen Führungen (8a,b), welche vorzugsweise eine oder mehrere Rollen (18a,b; 19a,b) umfassen, die einzigen direkten Kontaktpunkte des beweglichen Rahmens mit dem stationären Rahmen bilden.

3. Anordnung nach Anspruch 1 oder 2, wobei die beweglichen Führungen (8a,b) an mehreren Seiten der jeweiligen stationären Führung (4a,b) eingreifen, vorzugsweise beiderseits davon, insbesondere an der Vorderseite und der Hinterseite der jeweiligen stationären Führung, wobei vorzugsweise bewegliche Führungen einer unterschiedlichen Art eingesetzt sind, vorzugsweise an der einen Seite, wo der Druck relativ gering ist, ein reibungsarmes Material und an der gegenüberliegenden Seite, wo der Druck relativ hoch ist, eine Rolle.

4. Anordnung nach einem beliebigen der vorangehenden Ansprüche, wobei die stationären Führungen (4a,b) und der bewegliche Rahmen (3) eine solche Länge aufweisen, dass das Fahrzeug für eine oder zwei Person(en) in Trageeingriff mit den Tragemitteln, wenn in der abgesenkten Position, verfahren werden kann.

5. Anordnung nach einem beliebigen der vorangehenden Ansprüche, wobei der Caravan oder das Reisemobil ein Kennzeichenschild (37) an der Hinterseite aufweist, wobei sich die zwei stationären Führungen (4a,b) in einem gegenseitigen horizontalen Abstand zueinander befinden, welcher die horizontale Abmessung einem standardmäßigen Kennzeichenschild, insbesondere einem EU-Kennzeichenschild, übersteigt, im Besonderen ungefähr 52 cm übersteigt.

6. Anordnung nach Anspruch 5, wobei die zwei stationären Führungen (4a,b) in der Seitenansicht des Trägers im Wesentlichen L-förmig sind und an beiden Außenenden des L mit den Befestigungsmitteln versehen sind.

7. Anordnung nach Anspruch 6, des Weiteren umfassend ein Montagerohr (13), welcher mit Montageplatten (14) versehen ist, die an den Fahrgestellträgern (12) des Caravans oder des Reisemobil befestigt sind, wobei die horizontalen Schenkel der L-förmigen stationären Führungen an dem Montagerohr befestigt, insbesondere angeschweißt sind.

8. Anordnung nach einem beliebigen der Ansprüche 1-5, wobei die stationären Führungen (4a,b) über eine Biegung von ungefähr 90 Grad in die im Wesentlichen horizontalen, nach vorne ausgerichteten Endabschnitte, welche am Fahrgestell, insbesondere an den Fahrgestelllängsträgern (12) des Caravans oder des Reisemobil, befestigt sind, übergehen.

9. Anordnung nach Anspruch 8, wobei die Endabschnitte an einem Montagerohr (13) befestigt sind, welche quer zur Fahrtrichtung liegt und mittels Montageplatten (14) an den Fahrgestellträgern (12) des Caravans oder des Reisemobil befestigt ist.

10. Anordnung nach einem beliebigen der vorangehenden Ansprüche, wobei die Hinterseite des Caravans oder des Reisemobils ein Fenster (41) aufweist, wobei die stationären Führungen (4a,b) an einer Stelle über dem Fenster an der Hinterseite befestigt sind.

11. Anordnung nach einem beliebigen der vorangehenden Ansprüche, wobei der Caravan oder das Reisemobil ein Kennzeichenschild (37) und/oder Rücklichter/Bremslichter (36) umfasst, wobei die Tragemittel (6), insbesondere eine Plattform, in der Transportposition über dem Kennzeichenbild und/oder den Rücklichtern/Bremslichtern befestigt sind.

12. Anordnung nach einem beliebigen der vorangehenden Ansprüche, wobei die Mittel zum Bewegen ein Seilwindensystem umfassen, wobei das Seilwindensystem vorzugsweise eine oder mehrere Seilrollen (21a-d), welche am stationären Rahmen befestigt ist/sind, und eine oder mehrere Seilrollen (20a-d), welche am beweglichen Rahmen angebracht ist/sind, umfasst, wobei um diese Seilrollen das Seil (25) läuft, wobei die Winde (26) vorzugsweise auf einem bewegbaren Ausleger (24) angeordnet ist, vorzugsweise einer Auslegerstange, welche vorzugsweise am Träger (1) angelenkt ist, vorzugsweise an einer Seite des Trägers, wobei die Auslegerstange vorzugsweise Teil von Mittel zum Verriegeln des beweglichen Rahmens (3) in Bezug auf den stationären Rahmen (2) in der Transportposition ist, wobei die Winde vorzugsweise durch ein Werkzeug betätigbar ist, welches entfernbar darauf angeordnet werden kann, wie eine Kurbel oder ein (Akku-)Bohrwerkzeug.

13. Anordnung nach einem beliebigen der vorangehenden Ansprüche, wobei die Tragemittel (6) eine Plattform umfassen, welche insbesondere die Form eines Fahrradträgers (7) aufweist, der vorzugsweise hochgeklappt werden kann.

14. Träger (1) für den Einsatz in einer Anordnung nach einem beliebigen der vorangehenden Ansprüche, versehen mit Mitteln (31a,b) zum Befestigen des Trägers an der Hinterseite eines Hauptfahrzeugs wie ein Caravan oder ein Reisemobil, welche(s) an der Hinterseite einen unteren Randbereich (11), die mit einer Stoßfänger versehen ist, bildet, umfassend einen stationären Rahmen (2), welcher mit Befestigungsmitteln versehen ist, wobei der Rahmen zwei längliche, im Wesentlichen sich nach oben erstreckende, vorzugsweise im Wesentlichen vertikale stationäre Führungen (4a,b) umfasst, welche parallel zueinander sind, wobei die stationären Führungen vorzugsweise insbesondere rohrförmige Führungsstangen sind, wobei der Träger des Weiteren einen beweglichen Rahmen (3) umfasst, welcher mit Mitteln (6) zum Tragen eines oder mehrerer Fahrzeuge für eine oder zwei Personen versehen ist, wobei der Träger mit Mitteln (20a-d, 21a-d, 22-28) versehen ist, um das Tragemittel hinauf und hinunter entlang der länglichen Führungen zwischen einer abgesenkten Position, in welcher ein Fahrzeug für eine oder zwei Person(en) auf dem Tragemittel gesetzt oder von diesem entfernt werden kann, und einer Transportposition bewegen zu können, welche auf einem höheren Niveau gelegen ist, wobei der bewegliche Rahmen mit Führungen (8a,b) welche gemeinsam mit ihm bewogen werden für geführten Eingriff auf der Außenfläche der stationären Führungen (4a,b) am stationären Rahmen, versehen ist, wobei die beweglichen Führungen eine erste (18a,b) und eine zweite (19a,b) Führung umfassen, welche in Führungsrichtung mit einem, vorzugsweise konstanten, Zwischenabstand zueinander angeordnet sind, wobei die Führungen vorzugsweise eine oder mehrere Rollen umfassen, wobei die die stationären länglichen Führungen über eine Biegung von ungefähr 90 Grad in die im Wesentlichen horizontalen, nach vorne ausgerichteten Endabschnitte übergehen, um sich hinter und unterhalb entlang der unteren Randbereich zu erstrecken und um mit ihren unteren Enden am Fahrgestell, insbesondere den Fahrgestelllängsträgern, des Caravans oder des Reisemobils befestigt zu werden.

15. Träger nach Anspruch 14, wobei die zwei stationären Führungen (4a,b) in einem gegenseitigen horizontalen Abstand zueinander angeordnet sind, welcher die horizontale Abmessung einem standardmäßigen Kennzeichenschild, insbesondere einem EU-Kennzeichenschild, übersteigt, insbesondere ungefähr 52 cm übersteigt.

## Revendications

1. Ensemble (1, 10) d'un véhicule principal (10), tel qu'une caravane ou un camping-car, et un bâti (1) pour transporter des véhicules pour une ou deux personne(s), lesdits véhicules étant équipés de roues, en particulier des bicyclettes, le bâti étant pourvu de moyens (31a,b) pour attacher le bâti au côté arrière d'un véhicule principal, le bâti comprenant un cadre stationnaire (2) pourvu des moyens de fixation, ledit cadre comprenant deux guides stationnaires allongés de préférence sensiblement verticaux s'étendant sensiblement vers le haut (4a,b) qui sont parallèles l'un à l'autre, lesdits guides stationnaires comprenant de préférence des tiges de guidage, en particulier tubulaires, dans lequel le bâti comprend en outre un cadre mobile (3) qui est pourvu de moyens (6) pour supporter un ou plusieurs véhicule(s) pour une ou deux personne(s), dans lequel le bâti est pourvu de moyens (20a-d, 21a-d, 22-28) pour déplacer les moyens de support vers le haut et vers le bas le long des guides allongés entre une position abaissée, dans laquelle un véhicule pour une ou deux personne(s) peut être placé sur les moyens de support ou être enlevé de ceux-ci, et une position de transport qui est située à un niveau plus élevé, dans lequel le cadre mobile est pourvu de guides (8a,b) qui se déplacent de concert avec celui-ci pour réaliser un engagement guidé sur la surface extérieure des guides stationnaires (4a,b) au cadre stationnaire, dans lequel la caravane ou le camping-car forme au côté arrière une région de bord inférieur (11) pourvue d'un pare-chocs, **caractérisé en ce que** les guides mobiles (8a,b) comprennent un premier guide (18a,b) et un deuxième guide (19a,b) qui dans une direction de guidage sont situés à une distance intermédiaire de préférence constante l'un de l'autre, et **en ce que** les guides stationnaires (4a,b) s'étendent derrière et en dessous le long de la région de bord inférieur et sont attachés avec leurs extrémités inférieures au châssis, en particulier aux poutres longitudinales de châssis (12), de la caravane ou du camping-car (10).

2. Ensemble selon la revendication 1, dans lequel les guides mobiles (8a,b), qui comprennent de préférence un ou plusieurs rouleau(x) (18a,b; 19a,b), forment les seuls points de contact directs du cadre mobile avec le cadre stationnaire.

3. Ensemble selon la revendication 1 ou 2, dans lequel les guides mobiles (8a,b) s'engagent sur plusieurs côtés des guides stationnaires respectifs (4a,b), de préférence sur les deux côtés de ceux-ci, en particulier sur le côté avant et le côté arrière du guide stationnaire respectif, dans lequel des guides mobiles de préférence d'un type différent ont été utilisés, de préférence du côté où la pression est relativement basse, une glissière constituée d'un matériau à faible frottement, et du côté opposé où la pression est relativement élevée, un rouleau.

4. Ensemble selon l'une quelconque des revendications précédentes, dans lequel les guides stationnaires (4a,b) et le cadre mobile (3) présentent une longueur telle que le véhicule pour une ou deux personne(s) puisse être roulé en engagement de support avec les moyens de support lorsque ceux-ci se trouvent dans la position abaissée.

5. Ensemble selon l'une quelconque des revendications précédentes, dans lequel la caravane ou le camping-car comporte une plaque d'immatriculation (37) à l'arrière, dans lequel les deux guides stationnaires (4a,b) sont situés à une distance horizontale mutuelle l'un de l'autre qui excède la dimension horizontale d'une plaque d'immatriculation standard, en particulier une plaque européenne normalisée, dépasse en particulier approximativement 52 centimètres.

6. Ensemble selon la revendication 5, dans lequel les deux guides stationnaires (4a,b) dans une vue latérale du bâti sont sensiblement en forme de L, et lesdits moyens de fixation sont prévus sur les deux extrémités extérieures du L.

7. Ensemble selon la revendication 6, comprenant en outre une profile creux de montage (13) qui est pourvue de plaques de montage (14) attachées aux poutres de châssis (12) du camping-car ou de la caravane, dans lequel les branches horizontales des guides stationnaires en forme de L sont attachées, en particulier soudées, à la profile creux de montage.

8. Ensemble selon l'une quelconque des revendications 1 à 5, dans lequel les guides stationnaires (4a,b), par l'intermédiaire d'un coude d'approximativement 90 degrés, fusionnent dans des parties d'extrémité sensiblement horizontales orientées vers l'avant qui sont attachées au châssis, en particulier aux poutres longitudinales de châssis (12), de la caravane ou du camping-car.

9. Ensemble selon la revendication 8, dans lequel les parties d'extrémité sont attachées à une profile creux de montage (13) qui est transversale à la direction de déplacement et qui est attachée aux poutres de châssis (12) du camping-car ou de la caravane au moyen de plaques de montage (14).

10. Ensemble selon l'une quelconque des revendications précédentes, dans lequel le côté arrière de la caravane ou du camping-car comporte une fenêtre (41), dans lequel les guides stationnaires (4a,b) sont attachés au côté arrière en un endroit situé au-dessus de la fenêtre.

11. Ensemble selon l'une quelconque des revendications précédentes, dans lequel la caravane ou le camping-car comporte une plaque d'immatriculation (37) et/ou des feux arrière/feux de freinage (36), dans lequel les moyens de support (6), en particulier la plate-forme, dans la position de transport, sont situés au-dessus de la plaque d'immatriculation et/ou des feux arrière/feux de freinage.

12. Ensemble selon l'une quelconque des revendications précédentes, dans lequel lesdits moyens de déplacement comprennent un système de treuil à câble, dans lequel le système de treuil à câble comprend de préférence une ou plusieurs poulie(s) (21a-d) attachée(s) au cadre stationnaire et une ou plusieurs poulie (s) (20a-d) attachée (s) au cadre mobile, poulies autour desquelles le câble (25) court, dans lequel le treuil (26) est de préférence agencé sur un tangon mobile (24), de préférence un tangon en forme de barre, qui est de préférence articulée sur le bâti (1), de préférence d'un côté du bâti, dans lequel le tangon en forme de barre constitue de préférence une partie des moyens de verrouillage du cadre mobile (3) par rapport au cadre stationnaire (2) dans la position de transport, dans lequel le treuil est de préférence actionnable par un outil qui peut être disposé de façon amovible sur celui-ci, tel qu'une manivelle ou un outil de perçage (sans cordon).

13. Ensemble selon l'une quelconque des revendications précédentes, dans lequel les moyens de support (6) comprennent une plate-forme, en particulier qui présente la forme d'un support de bicyclette (7), qui de préférence peut être replié.

14. Bâti (1) à utiliser dans un ensemble selon l'une quelconque des revendications précédentes, comprenant des moyens (31a,b) pour attacher le bâti au côté arrière d'un véhicule principal, tel qu'une caravane ou un camping-car, qui forme sur le côté arrière une région de bord inférieur (11) pourvue d'un pare-chocs, comprenant un cadre stationnaire (2) pourvu de moyens de fixation, ledit cadre comprenant deux guides stationnaires allongés de préférence sensiblement verticaux s'étendant sensiblement vers le haut (4a,b) qui sont parallèles l'un à l'autre, lesdits guides stationnaires comprenant de préférence des tiges de guidage, en particulier tubulaires, dans lequel le bâti comprend en outre un cadre mobile (3) qui est pourvu de moyens (6) pour supporter un ou plusieurs véhicule(s) pour une ou deux personne(s), dans lequel le bâti est pourvu de moyens (20a-d, 21a-d, 22-28) pour déplacer les moyens de support vers le haut et vers le bas le long des guides allongés entre une position abaissée, dans laquelle un véhicule pour une ou deux personne(s) peut être placé sur les moyens de support ou être enlevé de ceux-ci, et une position de transport qui est située à un niveau plus élevé, dans lequel le cadre mobile est pourvu de guides (8a,b) qui se déplacent de concert avec celui-ci pour réaliser un engagement guidé sur la surface extérieure des guides stationnaires au cadre stationnaire, lesdits guides mobiles comprenant un premier guide (18a,b) et un deuxième guide (19a,b), qui dans une direction de guidage sont situés à une distance intermédiaire de préférence constante l'un de l'autre, lesdits guides comprenant de préférence un ou plusieurs rouleau(x), dans lequel les guides stationnaires allongés, par l'intermédiaire d'un coude d'approximativement 90 degrés, fusionnent dans des parties d'extrémité sensiblement horizontales orientées vers l'avant afin de s'étendre derrière et en dessous le long de la région de bord inférieur et d'être attachés avec leurs extrémités inférieures au châssis, en particulier aux poutres longitudinales de châssis, de la caravane ou du camping-car.

15. Bâti selon la revendication 14, dans lequel les deux guides stationnaires (4a,b) sont situés à une distance horizontale mutuelle l'un de l'autre qui excède la dimension horizontale d'une plaque d'immatriculation standard, en particulier une plaque européenne normalisée, dépasse en particulier approximativement 52 centimètres.
